(19) **Europäisches Patentamt European Patent Office Office européen des brevets**

(11) **EP 2 788 731 B1**

(12) **EUROPEAN PATENT SPECIFICATION**

(45) Date of publication and mention
of the grant of the patent:
**20.02.2019 Bulletin 2019/08**

(21) Application number: **12856498.6**

(22) Date of filing: **06.12.2012**

(51) Int Cl.:
**G01K 15/00** *(2006.01)* **G01K 7/22** *(2006.01)*

(86) International application number:
**PCT/SE2012/051347**

(87) International publication number:
**WO 2013/085458 (13.06.2013 Gazette 2013/24)**

(54) **METHOD FOR TESTING OF TEMPERATURE SENSORS AND A TESTING DEVICE**

VERFAHREN ZUM TESTEN VON TEMPERATURSENSOREN UND TESTVORRICHTUNG

PROCÉDÉ DE TEST DE CAPTEURS DE TEMPÉRATURE ET DISPOSITIF DE TEST

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2011 SE 1151167**

(43) Date of publication of application:
**15.10.2014 Bulletin 2014/42**

(73) Proprietor: **Scania CV AB**
**151 87 Södertälje (SE)**

(72) Inventors:
• **STRÅÅT, Fredrik**
**S-113 35 Södertälje (SE)**

• **STENLÅÅS, Ola**
**S-151 48 Södertälje (SE)**

(74) Representative: **Scania CV AB**
**Patents, GP 117kv**
**151 87 Södertälje (SE)**

(56) References cited:
**WO-A1-98/55977        GB-A- 2 140 923**
**GB-A- 2 140 923        US-A1- 2006 104 330**
**US-A1- 2006 104 330    US-A1- 2009 010 302**
**US-A1- 2009 028 214**

# Description

Field of the invention

The present invention relates to a method and a device according to the preambles of the independent claims, and in particular to a method and a test device for a temperature sensor with negative temperature coefficient.

Background to the invention

The present invention is particularly intended for resistive temperature sensors, so-called thermistors, which are used in vehicles, but it may of course also be applied generally with resistive temperature sensors.

A thermistor is generally an electronic component, a resistor, whose resistance depends on temperature. There are many areas of application, e.g. in electronic thermometers, thermostats and overheating protection. There are thermistors with a very large number of resistance values and different sensitivities. There are ones with both positive temperature coefficient PTC and negative temperature coefficient NTC. The resistance of the positive type increases with rising temperature, and the resistance of the negative type drops when the temperature increases.

Power trains of trucks are currently provided with various resistive temperature sensors, thermistors, e.g. NTC, which has a negative temperature coefficient, and PT200, which has a positive temperature coefficient.

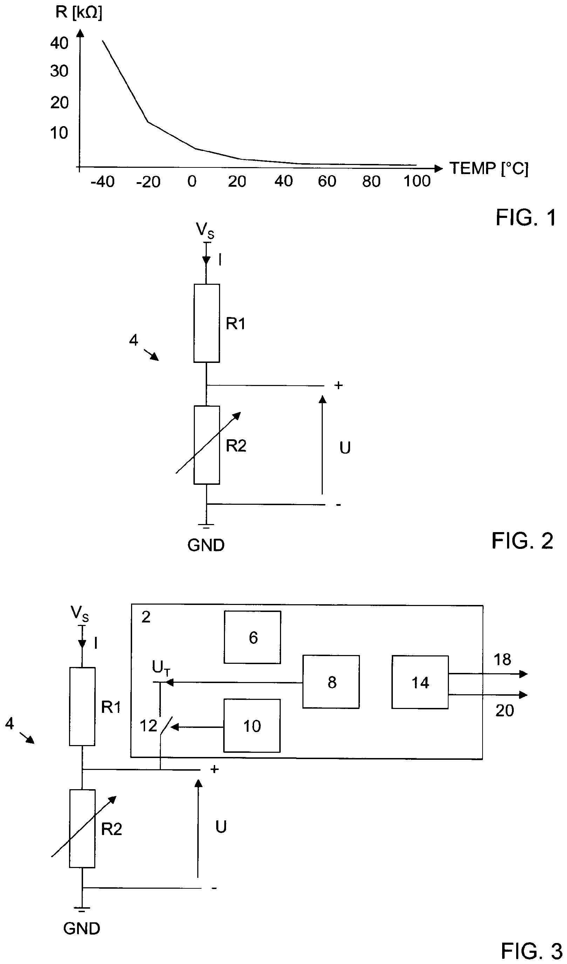

Figure 1 is a typical graph for an NTC thermistor, in this case of the 2 k$\Omega$/25°C type, which at the resistance 2 k$\Omega$ therefore indicates a temperature of 25°C. With an electronic control unit it is possible to read off the resistance and thereby determine the temperature.

To measure the resistance, so-called voltage division is used in the control unit, as illustrated in Figure 2.

Figure 2 is a simple schematic diagram of a temperature sensor with a temperature-sensitive resistor R2 and a resistor R1 with known resistance. The temperature sensor is connected to the voltage $V_S$ and the current I flows through the resistors R1 and R2. The voltage U is measured across R2 and according to Ohm's law the following relationships then apply:

$$V_S = (R1 + R2) \times I$$

$$I = U/R2$$

The following expression for the resistance R2 is thus arrived at:

$$R2 = \frac{R1 \times U}{V_S - U}$$

The voltage U across the NTC resistor (R2) is thus measured when it is connected in series with a known resistor. This makes it possible to calculate the resistance and hence the temperature.

There are a number of legal requirements for heavy vehicles within the EU (e.g. Euro5 and Euro6), e.g. with regard to emission limits for exhaust gases, noise levels etc. Some of these requirements are related to certain temperature levels, e.g. there is no need to comply with emission requirements if for example the temperature is below +5°C. This in conjunction with the vehicle manufacturers' own needs results in requirements with regard to accuracy and reliability. Sometimes even redundancy (extra sensors) is required to meet legal requirements. There is also risk that less scrupulous hauliers/haulage contractors might try to cheat by tampering with the temperature sensors so that they show errors, i.e. manipulation of the sensors. Here again there are legal requirements to protect the equipment against such practices.

The patent specifications cited below refer to calibration and testing of thermistors.

US-2006/0104330 refers to a method and a device for calibrating a thermistor, particularly for a printer head in an inkjet printer. In simplified terms, this involves warming the thermistor by applying a constant voltage or a constant power and then measuring the resistance before and during the warming of the thermistor. Data for use in the calibration may thus be gathered.

WO-98/55977 refers to an electronic heat detector consisting of a thermistor. By applying a voltage in the form of a test pulse for 10 seconds the function of the thermistor can be tested by seeing whether the thermistor becomes warm.

GB 2 140 923 A describes a method for testing the characteristics of a resistance thermometer comprising a resistance element (PTC). A formula is derived, representative of the thermometer's heat transfer function. A heating current is passed through the resistance element for a limited period to heat the thermometer. Variations with time of the resistance of the element as its temperature varies are monitored. The formula constants are calculated such that the formula fits the monitored variations in resistance.

The object of the present invention is to improve the supervision of temperature sensors, particularly those used on vehicles, in order inter alia to prevent manipulation of such sensors and check their function.

Summary of the invention

The above objects are achieved with the invention as it is defined by the independent claims.

Preferred embodiments are defined by the dependent claims.

The fact that according to the present invention the temperature sensor exhibits a resistance makes it possible to develop power in the sensor by applying across it a voltage pulse which has for example a magnitude of the order of 5 volts and a duration of not more than one second. When energy is supplied, the temperature of the sensor will also rise. The invention thus makes it possible to diagnose the sensor, i.e. to verify that it really exhibits a temperature dependency. It is preferably also possible to calibrate the accuracy of the temperature measurement, and the offset voltage, and ensure that it shows correct temperatures.

In brief, the method according to the invention comprises

    1. measuring the resistance,
    2. applying a specified voltage for a specified time,
    3. measuring the resistance and analysing how it changes after the voltage pulse applied.

In one embodiment the difference between the resistances measured before and after the voltage pulse applied to the temperature-dependent resistor is arrived at, followed by analysing how the resistance changes after the voltage pulse by comparing the measured resistance with a predetermined level related to the difference. This predetermined level may for example be an increase in the resistance of 63% relative to the resistance just at the end of the voltage pulse. Measuring the time taken to reach this level makes it possible to determine definitely the resistor's function.

In one aspect of the present invention, the testing of a temperature sensor takes place at the same time as beginning to use the sensor, in order thereby to obtain measured values which definitely identify the sensor and can be used in calibration. These measured values may be stored for subsequent use in comparison with values measured subsequently. Any subsequent measurement which shows that the values differ too much means that the sensor is no longer working as intended.

The method and the test device according to the present invention afford inter alia the following advantages compared with prior art:

•   no need for redundant temperature sensors
•   sensor can be diagnosed without using other sensors
•   manipulation can be prevented
•   sensor can be calibrated for more accurate measurement

The fact that the present invention involves analysis of how the resistance changes after the voltage pulse applied also affords substantial advantages compared with prior art. First measuring the resistance, followed by applying a specified voltage for a specified time and thereby raising the temperature of the sensor, thereafter measuring the resistance again and finally analysing how the resistance changes after the voltage pulse applied provides a substantially improved appraisal of the characteristics and function of the sensor. The fact that the present invention analyses how the resistance changes after the voltage pulse applied/the warming results in an appraisal which better correlates with how the sensor and its output signal are affected by the surroundings. As part of the present invention, the inventors have for example found that the location and configuration of the sensor, e.g. with respect to surrounding protective material of various kinds, may substantially affect the resulting characteristics and working of the sensor. The present invention takes this into account in an effective and robust way. As part of the present invention, the inventors have found that the prior art procedure whereby measurements, e.g. with respect to time constants, take place during the time when the sensor is being actively warmed does not provide a true picture of its resulting characteristics.

Brief description of drawings

Figure 1 is a schematic graph illustrating how temperature varies with resistance in the case of an NTC resistor.
Figure 2 is a schematic diagram of a known temperature sensor.
Figure 3 is a block diagram illustrating the test device according to the present invention when testing a temperature sensor.
Figure 4 is a schematic graph illustrating the present invention.
Figure 5 is a schematic graph illustrating the present invention.
Figure 6 is a flowchart illustrating the method according to the invention.

Detailed description of preferred embodiments of the invention

The invention will now be described in detail with reference to the attached drawings. Figure 3 is a block diagram illustrating the test device according to the present invention when testing a temperature sensor.

Figure 3 thus depicts a test device 2 for testing a temperature sensor 4, which sensor comprises a temperature-dependent resistor R2 with a resistance R and a negative temperature coefficient. The test device comprises a measuring unit 6 adapted to determining the resistance R of R2 at a first time t1 and calling it $R_{t1}$. This is for example achieved by measuring the voltage across R2 and then calculating the resistance R of R2 as described above in relation to Figure 2. As the temperature depends on the resistance of R2 an appraisal of the temperature may also be obtained.

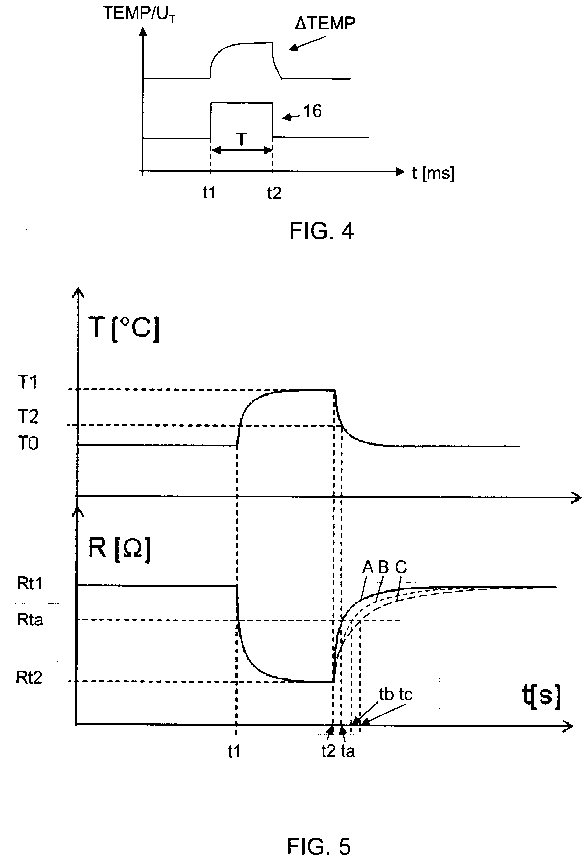

The test device 2 further comprises a voltage supply circuit 8, a control unit 10, a switch 12 and a calculation unit 14. The switch 12 is adapted to being controlled by the control unit 10 so that the voltage circuit 8 is connected and applies to the resistor R2 a voltage pulse 16 (see Figure 4) with a predetermined voltage amplitude $U_T$ and a predetermined duration T. Immediately after the voltage pulse, the resistance R of R2 is determined by the measuring unit 6 at a second time t2 which it calls $R_{t2}$. The measuring unit is then adapted to determining the resistance R of R2 after time t2 in order to identify how the resistance changes from level $R_{t2}$ to $R_{t1}$.

The resistance R is preferably determined substantially continuously after time t2. This may be done by sampling the resistance after t2 at a high enough sampling rate to ensure that changes in the resistance are identified.

The measuring unit 6 delivers the resistance values determined ($R_{t1}$, $R_{t2}$ and R) to said calculation unit 14 which is adapted to determining at least one measured value of a parameter which represents the change in the resistance after time t2, and to generating on the basis of said measured value an information signal 18 which is representative of the sensor's function.

In one embodiment, the measuring parameter is an amount of time t after time t2. The change in the resistance after time t2 is determined by calculating the absolute value of the resistance difference $\Delta R = |R_{t1} - R_{t2}|$, calculating $R_a = R_{t2} + a \times \Delta R$, where a is a predetermined constant between 0 and 1, and determining a measured value $t_a$ when the measured resistance R is equal to $R_a$. The value of a in one embodiment is 0.63. In the case of certain types of resistors R2 it may be more advantageous to adopt other values which more clearly reflect their function.

It is of course possible to indicate a number of different threshold values for the resistance after time t2 which may then be calculated by the same formula for $R_a$ as above and which for example allow a to have ten values between 0 and 1. Corresponding measured values are then determined for t. The accuracy of the measurement is thus increased.

The calculation unit 14 is adapted to comparing the information signal 18 generated, or parameters in the information signal, with a set of information signals, or parameters for information signals, which represent characteristics of different temperature sensors, and to generating on the basis of the comparison an identity signal 20 which represents the characteristic which best corresponds to the information signals of the sensor measured. Examples of parameters in the information signal may be single measured values, two or more measured values, specific curve shapes and the rate of change (i.e. the derivative) of the resistance.

Figure 4 shows a curve representing the voltage pulse 16 and a curve representing the temperature change of R2 during the voltage pulse. The voltage pulse is the lower curve, which has a clearly square shape. Beginning and end times (t1 and t2) are marked, and the pulse length T. The upper curve shows how the temperature changes in the resistor during the voltage pulse. It rises quickly initially but the rate of rise decreases and the curve levels out towards a stable value. At t2 the temperature starts to decrease and then drops back towards the previous level.

Figure 5 is a graph schematically illustrating the underlying principle of the present invention.

The upper graph in Figure 5 shows how the temperature changes when the voltage pulse is applied to the resistor R2. From a T0 level the temperature rises to T1 at the end of the pulse before gradually returning to T0 after the pulse.

The lower graph in Figure 5 shows how the resistance through the resistor R2 varies when the voltage pulse is applied. Before the pulse, the resistance is at Rt1 but at the end of the pulse at time t2 it has dropped to Rt2. The present invention analyses the pattern after the voltage pulse. To illustrate the principle, three different patterns designated A, B and C in the diagram are shown after the voltage pulse for three different resistors. These resistors exhibit different temperature behaviours reflected in different lengths of time for the resistance to increase from Rt2 to a predetermined resistance indicated in the diagram as Rta. Curve A reaches the resistance value Rta after ta seconds, curve B after tb seconds and curve C after tc seconds. As the time taken for the resistance to change from Rt2 to Rta is unique to each type of temperature-sensitive resistor, the function can be definitely determined by means of the present invention by comparing the time measured with a set of times for different types of temperature-sensitive resistors.

If curve A represents "approved" working of the resistor, the identity signal 20 will for example contain the information that the resistor is approved and what type of resistor it is.

The length (duration) adopted for the voltage pulse will depend on what function the resistor R2 has. Long pulse length risks destroying the resistor. One embodiment adopts a voltage pulse duration T of less than 1 second, e.g. within the range 5-50 ms, preferably about 10 ms.

The amplitude $U_T$ adopted for the voltage pulse is preferably less than 36 volts, which in vehicle applications is normally the maximum available voltage. One embodiment adopts voltage pulse amplitude $U_T$ within the range 3-36 volts, more preferably 3-7 volts and preferably 5 volts.

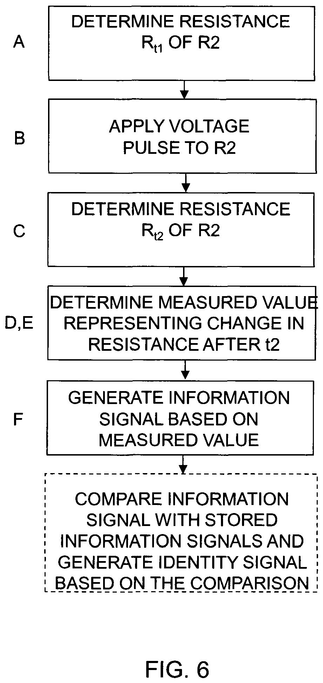

The invention comprises also a method for testing a temperature sensor which comprises a temperature-dependent resistor (R2) with negative temperature coefficient and the resistance R. The method will now be described primarily with respect to the flowchart in Figure 6.

The method comprises the steps of

A - determining the resistance R of the resistor R2 at a first time t1 and calling it $R_{t1}$,
B - applying to the resistor R2 a voltage pulse with a predetermined amplitude $U_T$ and a predetermined duration T,

C - determining the resistance R of the resistor R2 after the voltage pulse at a second time t2 and calling it $R_{t2}$,

D - measuring the resistance R of R2 after time t2,

E - determining at least one measured value of a parameter which represents the change in the resistance after time t2, and

F - generating on the basis of said measured value an information signal which is representative of the temperature sensor's function.

Said measuring parameter is preferably the length of time t after time t2, and step E comprises

- calculating the absolute value of the resistance difference $\Delta R = |R_{t1} - R_{t2}|$,
- calculating $R_a = R_{t2} + a \times \Delta R$, where a is a predetermined constant between 0 and 1, and
- determining a measured value $t_a$ when the measured resistance R is equal to $R_a$.

In a preferred embodiment, a = 0.63.

It is of course possible to indicate a number of different threshold values for the resistance after time t2, which may then be calculated by the same formula for $R_a$ as above and allows a to have for example ten values between 0 and 1. Corresponding measured values of t are then determined. The accuracy of the measurement is thus increased.

In one embodiment, the method comprises comparing the information signal generated at step F, or parameters in the information signal, with a set of information signals, or parameters for information signals, which represent characteristics of different temperature sensors, and generating on the basis of the comparison an identity signal which represents the characteristic which best corresponds to the information signal of the temperature sensor measured. Examples of parameters in the information signal may be single measured values, two or more measured values, specific curve shapes and the rate of change (i.e. the derivative) of the resistance.

The above discussion in connection with the description of the test device applies also to the method with regard to the duration and amplitude of the voltage pulse.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. A method for testing a temperature sensor, which sensor comprises a temperature-dependent resistor (R2) with a resistance R and has a negative temperature coefficient,

   **characterised in that**
   the method comprises the steps of

   A - determining the resistance R of the resistor R2 at a first time t1 and calling it $R_{t1}$,

   B - applying to the resistor R2 a voltage pulse with a predetermined amplitude $U_T$ and a predetermined duration T,

   C - determining the resistance R of the resistor R2 after the voltage pulse at a second time t2 and calling it $R_{t2}$,

   D - determining the resistance R of R2 after time t2,

   E - determining at least one measured value of a parameter which represents the change in the resistance after time t2, and

   F - generating on the basis of said measured value an information signal which is representative of the temperature sensor's function.

   in which said measuring parameter is an amount of time t after time t2 and
   in which step E comprises

   - calculating the absolute value of the resistance difference $\Delta R = |R_{t1} - R_{t2}|$,
   - calculating $R_a = R_{t2} + a \times \Delta R$, where a is a predetermined constant between 0 and 1, and
   - determining a measured value $t_a$ when the measured resistance R is equal to $R_a$

2. A method according to claim 1, in which a = 0.63.

3. A method according to any one of claims 1-2, comprising comparing the information signal generated at step F, or parameters in the information signal, with a set of information signals, or parameters for information signals, which represent characteristics of different temperature sensors, and generating on the basis of the comparison an identity signal which represents the characteristic which best corresponds to the information signal of the temperature sensor measured.

4. A method according to any one of claims 1-3, in which the duration T of the voltage pulse is shorter than 1 second.

5. A method according to claim 4, in which the duration T of the voltage pulse is within the range 5-50 ms.

6. A method according to claim 5, in which the duration T of the voltage pulse is 10 ms.

7. A method according to any one of claims 1-6, in which the amplitude $U_T$ of the voltage pulse is below 36 volts.

8. A method according to claim 7, in which the amplitude $U_T$ of the voltage pulse is within the range 3-7 volts.

9. A method according to claim 8, in which the amplitude $U_T$ of the voltage pulse$_T$ is 5 volts.

10. A method according to any one of the foregoing claims, in which step D determines the resistance R substantially continuously after time t2.

11. A test device (2) for testing a temperature sensor (4), which sensor comprises a temperature-dependent resistor (R2) with a resistance R and a negative temperature coefficient,
which test device comprises a measuring unit (6) adapted to determining the resistance R of R2 at a first time t1 and calling it $R_{t1}$,
**characterised in that** the test device (2) comprises a voltage supply circuit (8), a control unit (10), a switch (12) and a calculation unit (14), that the switch (12) is adapted to being controlled by the control unit (10) so that the voltage supply circuit (8) is connected and applies to the resistor R2 at time t1 a voltage pulse (16) with a predetermined voltage amplitude $U_T$ and a predetermined duration T,
and that said measuring unit (6) is adapted to determining the resistance R of the resistor R2 immediately after the voltage pulse (16) at a second time t2 and calling it $R_{t2}$, to determining the resistance R of R2 after time t2 and to delivering the resistance values determined to said calculation unit (14) which is adapted to determining at least one measured value of a parameter which represents the change in the resistance after time t2 and to generating on the basis of said measured value an information signal (18) which is representative of the sensor's function in which said measuring parameter is an amount of time t after time t2, and in which the change in the resistance after time t2 is determined by calculating the absolute value of the resistance difference $\Delta R = |R_{t1} - R_{t2}|$, calculating $R_a = R_{t2} + a \times \Delta R$, where a is a predetermined constant between 0 and 1, and determining a measured value $t_a$ when the measured resistance R is equal to $R_a$.

12. The test device according to claim 11, in which a = 0.63.

13. The test device according to claim 11, in which the calculation unit (14) is adapted to comparing the information signal generated at step F, or parameters in the information signal (18), with a set of information signals, or parameters for information signals, which represent characteristics of different temperature sensors, and to generating on the basis of the comparison an identity signal (20) which represents the characteristic which best corresponds to the information signal of the temperature sensor measured.

14. The test device according to any one of claims 11-13, in which the duration T of the voltage pulse is shorter than 1 second.

15. The test device according to claim 14, in which the duration T of the voltage pulse is within the range 5-50 ms.

16. The test device according to claim 15, in which the duration T of the voltage pulse is 10 ms.

17. The test device according to any one of claims 11-16, in which the amplitude $U_T$ of the voltage pulse is below 36 volts.

18. The test device according to claim 17, in which the amplitude $U_T$ of the voltage pulse$_T$ is within the range 3-7 volts.

19. The test device according to claim 18, in which the amplitude $U_T$ of the voltage pulse$_T$ is 5 volts.

20. The test device according to any one of claims 11-19, in which the resistance R is determined substantially continuously after time t2.

**Patentansprüche**

1. Verfahren zum Testen eines Temperatursensors, wobei der Sensor einen temperaturabhängigen Widerstand (R2) mit einem Widerstandswert R aufweist und einen negativen Temperaturkoeffizienten hat,
**dadurch gekennzeichnet, dass** das Verfahren die Schritte aufweist

    A - Bestimmen des Widerstandswertes R des Widerstands (R2) zu einem ersten Zeitpunkt t1 und Bezeichnen diesen als $R_{t1}$,
    B - Anlegen eines Spannungsimpulses an den Widerstand (R2) mit einer vorgegebenen Amplitude $U_T$ und einer vorgegebenen Dauer T,
    C - Bestimmen des Widerstandswertes R des Widerstands (R2) nach dem Spannungsimpuls zu einem zweiten Zeitpunkt t2 und Bezeichnen diesen als $R_{t2}$;
    D - Bestimmen des Widerstandswertes R von R2 nach dem Zeitpunkt t2,
    E - Bestimmen mindestens eines Messwertes eines Parameters, der die Widerstandsänderung nach dem Zeitpunkt t2 repräsentiert, und
    F - Erzeugen eines Informationssignals auf Basis dieses Messwertes, das für die Funktion des Temperatursensors repräsentativ ist,

wobei der gemessene Parameter ein Betrag einer Zeit t im Zeitpunkt t2 ist und wobei Schritt E aufweist

- Berechnen des absoluten Wertes der Widerstandsdifferenz $\Delta R = |R_{t1} - R_{t2}|$,
- Berechnen von $R_a = R_{t2} + a \times \Delta R$, wobei a eine vorgegebene Konstante zwischen 0 und 1 ist, und
- Bestimmen eines Messwertes $t_a$, wenn der gemessene Widerstandswert R gleich $R_a$ ist.

2. Verfahren nach Anspruch 1, wobei a = 0,63.

3. Verfahren nach einem der Ansprüche 1 bis 2, das den Schritt Vergleichen des in Schritt F erzeugten Informationssignals oder von Parametern im Informationssignal mit einem Satz Informationssignalen oder Parametern für Informationssignale, die Kennwerte verschiedener Temperatursensoren repräsentieren, und des Erzeugens eines Identitätssignals auf Basis des Vergleichs aufweist, das den Kennwert repräsentiert, der dem Informationssignal des gemessenen Temperatursensors am besten entspricht.

4. Verfahren nach einem der Ansprüche 1 bis 3, wobei die Dauer T des Spannungsimpulses kürzer ist als eine Sekunde.

5. Verfahren nach Anspruch 4, wobei die Dauer T des Spannungsimpulses im Bereich von 5 bis 50 msec liegt.

6. Verfahren nach Anspruch 5, wobei die Dauer T des Spannungsimpulses 10 msec beträgt.

7. Verfahren nach einem der Ansprüche 1 bis 6, wobei die Amplitude $U_T$ des Spannungsimpulses kleiner ist als 36 V.

8. Verfahren nach Anspruch 7, wobei die Amplitude $U_T$ des Spannungsimpulses im Bereich von 3 bis 7 V liegt.

9. Verfahren nach Anspruch 8, wobei die Amplitude $U_T$ des Spannungsimpulses 5 V beträgt.

10. Verfahren nach einem der vorigen Ansprüche, wobei in Schritt D der Widerstandswert R im Wesentlichen kontinuierlich nach dem Zeitpunkt t2 bestimmt wird.

11. Testeinrichtung (2) zum Testen eines Temperatursensors, wobei der Sensor einen temperaturabhängigen Widerstand (R2) mit einem Widerstandswert R aufweist und einen negativen Temperaturkoeffizienten hat,

wobei die Testeinrichtung eine Messeinheit (6) aufweist, die zur Bestimmung des Widerstandswertes R von R2 zu einem ersten Zeitpunkt t1 und zu dessen Bezeichnung als $R_{t1}$ eingerichtet ist,

**dadurch gekennzeichnet, dass** die Testeinrichtung (2) eine Spannungsversorgungsschaltung (8), eine Steuerungseinheit (10), einen Schalter (12) und eine Berechnungseinheit (14) aufweist, dass der Schalter (12) zur Steuerung durch die Steuerungseinheit (10) eingerichtet ist, so dass die Spannungsversorgungsschaltung (8) angeschlossen wird und an den Widerstand (R2) im Zeitpunkt T1 einen Spannungsimpuls (16) mit einer vorgegebenen Spannungsamplitude $U_T$ und einer vorgegebenen Dauer T anlegt,

und dass die Messeinheit (6) dazu eingerichtet ist, den Widerstandswert R des Widerstands (R2) unmittelbar nach dem Spannungsimpuls (16) in einem zweiten Zeitpunkt t2 zu bestimmen und als $R_{t2}$ zu bezeichnen, den Widerstandswert R von R2 nach dem Zeitpunkt t2 zu bestimmen und die bestimmten Widerstandswerte an die Berechnungseinheit (14) zu liefern, die dazu eingerichtet ist, mindestens einen Messwert eines Parameters, der die Widerstandsänderung nach dem Zeitpunkt t2 repräsentiert, zu bestimmen, und ein Informationssignal (18) auf Basis dieses Messwertes zu erzeugen, das für die Funktion des Temperatursensors repräsentativ ist, wobei der gemessene Parameter ein Betrag der Zeit t nach dem Zeitpunkt t2 ist, und wobei die Änderung des Widerstandwertes nach dem Zeitpunkt t2 durch Berechnen des absoluten Wertes der Widerstandsdifferenz $\Delta R = |R_{t1} - R_{t2}|$ bestimmt wird, durch Berechnen vob $R_a = R_{t2} + a \times \Delta R$, wobei a eine vorgegebene Konstante zwischen 0 und 1 ist, und wobei ein Messwert $t_a$ bestimmt wird, wenn der gemessene Widerstandswert R gleich ist $R_a$.

12. Testeinrichtung nach Anspruch 11, wobei a = 0,63.

13. Testeinrichtung nach Anspruch 11, wobei die Berechnungseinheit (14) dazu eingerichtet ist, das in Schritt F erzeugte Informationssignal oder Parameter im Informationssignal (18) mit einem Satz Informationssignalen oder Parametern für Informationssignale zu vergleichen, die Kennwerte verschiedener Temperatursensoren repräsentieren, und ein Identitätssignal (20) auf Basis des Vergleichs zu erzeugen, das den Kennwert repräsentiert, der dem Informationssignal des gemessenen Temperatursensors am besten entspricht.

14. Testeinrichtung nach einem der Ansprüche 11 bis 13, wobei die Dauer T des Spannungsimpulses kürzer ist als eine Sekunde.

15. Testeinrichtung nach Anspruch 14, wobei die Dauer T des Spannungsimpulses im Bereich von 5 bis 50 msec liegt.

16. Testeinrichtung nach Anspruch 15, wobei die Dauer T des Spannungsimpulses 10 msec beträgt.

17. Testeinrichtung nach einem der Ansprüche 11 bis 16, wobei die Amplitude $U_T$ des Spannungsimpulses kleiner ist als 36 V.

18. Testeinrichtung nach Anspruch 17, wobei die Amplitude $U_T$ des Spannungsimpulses im Bereich von 3 bis 7 V liegt.

19. Verfahren nach Anspruch 18, wobei die Amplitude $U_T$ des Spannungsimpulses 5 V beträgt.

20. Testeinrichtung nach einem der Ansprüche 11 bis 19, wobei der Widerstandswert R im Wesentlichen kontinuierlich nach dem Zeitpunkt t2 bestimmt wird.


## Revendications

1. Procédé d'essai d'un capteur de température, lequel capteur comprend une résistance (R2) dépendante de la température avec une résistance R et présente un coefficient de température négatif,
   **caractérisé en ce que**
   le procédé comprend les étapes consistant à

   A - déterminer la résistance R de la résistance R2 à un premier moment t1 et l'appeler $R_{t1}$,
   B - appliquer à la résistance R2 une impulsion de tension d'une amplitude prédéfinie $U_T$ et d'une durée T prédéterminée,
   C - déterminer la résistance R de la résistance R2 après l'impulsion de tension à un deuxième moment t2 et l'appeler $R_{t2}$,
   D - déterminer la résistance R de R2 après le moment t2,
   E - déterminer au moins une valeur mesurée d'un paramètre qui représente la variation de la résistance après le moment t2, et
   F - générer sur la base de ladite valeur mesurée un signal d'information représentatif du fonctionnement du capteur de température,

   dans lequel ledit paramètre de mesure est un laps de temps t après le moment t2 et dans lequel l'étape E comprend

   - le calcul de la valeur absolue de la différence de résistance $\Delta R = |R_{t1} - R_{t2}|$,
   - le calcul de $R_a = R_{t2} + a \times \Delta R$, où a est une constante prédéterminée comprise entre 0 et 1, et
   - la détermination d'une valeur mesurée $t_a$ lorsque la résistance R mesurée est égale à $R_a$

2. Procédé selon la revendication 1, dans lequel a = 0,63.

3. Procédé selon l'une quelconque des revendications 1 et 2, qui comprend la comparaison du signal d'information généré à l'étape F, ou de paramètres dans le signal d'information, à un ensemble de signaux d'information, ou de paramètres pour des signaux d'information, qui représentent des caractéristiques de différents capteurs de température, et la génération sur la base de la comparaison d'un signal d'identité qui représente la caractéristique qui correspond le mieux au signal d'information du capteur de température mesuré.

4. Procédé selon l'une quelconque des revendications 1 à 3, dans lequel la durée T de l'impulsion de tension est inférieure à 1 seconde.

5. Procédé selon la revendication 4, dans lequel la durée T de l'impulsion de tension est dans la plage de 5 à 50 ms.

6. Procédé selon la revendication 5, dans lequel la durée T de l'impulsion de tension est de 10 ms.

7. Procédé selon l'une quelconque des revendications 1 à 6, dans lequel l'amplitude $U_T$ de l'impulsion de tension est inférieure à 36 volts.

8. Procédé selon la revendication 7, dans lequel l'amplitude $U_T$ de l'impulsion de tension est dans la plage de 3 à 7 volts.

9. Procédé selon la revendication 8, dans lequel l'amplitude $U_T$ de l'impulsion de tension$_T$ est de 5 volts.

10. Procédé selon l'une quelconque des revendications qui précèdent, dans lequel l'étape D permet de déterminer la résistance R de manière sensiblement continue après le moment t2.

11. Dispositif d'essai (2) pour tester un capteur de température (4), lequel capteur comprend une résistance dépendante de la température (R2) avec une résistance R et un coefficient de température négatif, lequel dispositif d'essai comprend une unité de mesure (6) conçue pour déterminer la résistance R de R2 à un premier moment t1 et l'appeler $R_{t1}$,
   **caractérisé en ce que** le dispositif d'essai (2) comprend un circuit électrique (8), une unité de commande (10), un commutateur (12) et une unité de calcul (14), **en ce que** le commutateur (12) est conçu pour être commandé par l'unité de commande (10) afin que le circuit électrique (8) soit connecté et applique à la résistance R2 à un moment t1 une impulsion de tension (16) avec une amplitude de tension $U_T$ et une durée T prédéterminées,

et **en ce que** ladite unité de mesure (6) est conçue pour déterminer la résistance R de la résistance R2 immédiatement après l'impulsion de tension (16) à un deuxième moment t2 et l'appeler $R_{t2}$, à déterminer la résistance R de R2 après le moment t2 et à fournir les valeurs de résistance déterminées à ladite unité de calcul (14) conçue pour déterminer au moins une valeur mesurée d'un paramètre qui représente la variation de la résistance après le moment t2 et pour générer, sur la base de ladite valeur mesurée, un signal d'information (18) représentatif du fonctionnement du capteur, dans lequel ledit paramètre de mesure est un laps de temps t après le moment t2, et dans lequel la variation de la résistance après le moment t2 est déterminée par le calcul de la valeur absolue de la différence de résistance $\Delta R = |R_{t1} - R_{t2}|$, par le calcul de $R_a = R_{t2} + a \times \Delta R$, où a est une constante prédéterminée entre 0 et 1, et par la détermination d'une valeur mesurée $t_a$ lorsque la résistance mesurée R est égale à $R_a$.

12. Dispositif d'essai selon la revendication 11, dans lequel a = 0,63.

13. Dispositif d'essai selon la revendication 11, dans lequel l'unité de calcul (14) est conçue pour la comparaison du signal d'information généré à l'étape F, ou de paramètres dans le signal d'information (18), à un ensemble de signaux d'information, ou de paramètres pour des signaux d'information, qui représentent des caractéristiques de différents capteurs de température, et pour la détermination sur la base de la comparaison d'un signal d'identité (20) qui représente la caractéristique qui correspond le mieux au signal d'information du capteur de température mesuré.

14. Dispositif d'essai selon l'une quelconque des revendications 11 à 13, dans lequel la durée T de l'impulsion de tension est inférieure à 1 seconde.

15. Dispositif d'essai selon la revendication 14, dans lequel la durée T de l'impulsion de tension est dans la plage de 5 à 50 ms.

16. Dispositif d'essai selon la revendication 15, dans lequel la durée T de l'impulsion de tension est de 10 ms.

17. Dispositif d'essai selon l'une quelconque des revendications 11 à 16, dans lequel l'amplitude $U_T$ de l'impulsion de tension est inférieure à 36 volts.

18. Dispositif d'essai selon la revendication 17, dans lequel l'amplitude $U_T$ de l'impulsion de tension T est dans la plage de 3 à 7 volts.

19. Dispositif d'essai selon la revendication 18, dans lequel l'amplitude $U_T$ de l'impulsion de tension est de 5 volts.

20. Dispositif d'essai selon l'une quelconque des revendications 11 à 19, dans lequel la résistance R est déterminée de manière sensiblement continue après le moment t2.

FIG. 1

FIG. 2

FIG. 3

FIG. 4

FIG. 5

A | DETERMINE RESISTANCE $R_{t1}$ OF R2

↓

B | APPLY VOLTAGE PULSE TO R2

↓

C | DETERMINE RESISTANCE $R_{t2}$ OF R2

↓

D,E | DETERMINE MEASURED VALUE REPRESENTING CHANGE IN RESISTANCE AFTER t2

↓

F | GENERATE INFORMATION SIGNAL BASED ON MEASURED VALUE

↓

COMPARE INFORMATION SIGNAL WITH STORED INFORMATION SIGNALS AND GENERATE IDENTITY SIGNAL BASED ON THE COMPARISON

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060104330 A
- WO 9855977 A
- GB 2140923 A